(19) **Europäisches Patentamt / European Patent Office / Office européen des brevets**

(11) **EP 3 308 901 A1**

(12) **EUROPEAN PATENT APPLICATION**
published in accordance with Art. 153(4) EPC

(43) Date of publication:
**18.04.2018 Bulletin 2018/16**

(21) Application number: **16807454.0**

(22) Date of filing: **07.06.2016**

(51) Int Cl.:
**B23K 35/363** *(2006.01)*　　**B23K 35/26** *(2006.01)*
**C22C 12/00** *(2006.01)*　　**C22C 13/00** *(2006.01)*
**C22C 13/02** *(2006.01)*

(86) International application number:
**PCT/JP2016/066848**

(87) International publication number:
**WO 2016/199747 (15.12.2016 Gazette 2016/50)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **12.06.2015 JP 2015119585**

(71) Applicant: **Arakawa Chemical Industries, Ltd.**
**Osaka-shi**
**Osaka 541-0046 (JP)**

(72) Inventors:
• **KUBO, Natsuki**
**Osaka-shi**
**Osaka 538-0053 (JP)**
• **ODA, Takeshi**
**Osaka-shi**
**Osaka 538-0053 (JP)**
• **ISHIGA, Fumio**
**Osaka-shi**
**Osaka 538-0053 (JP)**

(74) Representative: **Studio Torta S.p.A.**
**Via Viotti, 9**
**10121 Torino (IT)**

(54) **FLUX FOR LEAD-FREE SOLDER, AND LEAD-FREE SOLDER PASTE**

(57) An object of the invention is to provide a flux for lead-free solder that exhibits excellent insulation resistance of the flux residue generated in the reflow step, while ensuring the wettability of solder metal, and that also increases the storage stability of the solder paste. The invention relates to a flux for lead-free solder that contains (A) a rosin-based base resin, (B) an activating agent, (C) a thixotropic agent, and (D) a solvent, wherein (B) the activating agent contains (b1) a dibasic acid activating agent, (b2) a bromine-based activating agent, and (b3) an amine-based activating agent represented by formula (1)

$$R^1\text{-NH-}R^2 \qquad (1)$$

wherein $R^1$ and $R^2$ independently represent $C_{6-10}$ alkyl.

**EP 3 308 901 A1**

**Description**

Technical Field

The present invention relates to flux for lead-free solder and lead-free solder paste.

Background Art

Flux for lead-free solder paste is typically produced by mixing a base resin, an activating agent, and additives, such as a thixotropic agent, with a solvent. For the base resin of flux, rosin, which provides excellent residue insulation resistance, is typically used. Rosin alone is not sufficiently active to improve the wettability of the solder metal in the reflow step, and a large amount of an activating agent is added to increase the activity of the flux. However, a large amount of an activating agent contained in the post-solder flux residue may corrode a metal plate that has come into contact with the flux. In addition, the reaction of the remaining activating agent and moisture in the atmosphere causes ion migration, which decreases insulation resistance.

An aqueous soldering flux containing rosin, an amine compound, a bromine-based activating agent, and a surfactant is known as a flux to overcome the ion migration problem (PTL 1). Halogen-based activating agents, such as bromine-based activating agents, however, decrease the insulation resistance of flux residues and the storage stability of the solder paste.

Citation List

Patent Literature

PTL 1: JP2002-120089A

Summary of Invention

Technical Problem

In view of the current status of the art, an object of the present invention is to provide a flux for lead-free solder that exhibits excellent insulation resistance of the flux residue generated in the reflow step, while ensuring the wettability of the solder metal, and that also increases the storage stability of the solder paste, although the flux for lead-free solder contains a bromine-based activating agent, which decreases insulation resistance.

Solution to Problem

The present inventors conducted extensive research, and found that a flux for lead-free solder containing predetermined starting materials can achieve the object. The present invention was completed based on the findings. Specifically, the present invention relates to the flux for lead-free solder and lead-free solder paste described in the following Items 1 to 9.

1. A flux for lead-free solder comprising

(A) a rosin-based base resin,
(B) an activating agent,
(C) a thixotropic agent, and
(D) a solvent,
wherein (B) the activating agent contains (b1) a dibasic acid activating agent, (b2) a bromine-based activating agent, and (b3) an amine-based activating agent represented by formula (1)

$$R^1\text{-NH-}R^2 \qquad (1)$$

wherein $R^1$ and $R^2$ independently represent $C_{6\text{-}10}$ alkyl.

2. The flux for lead-free solder according to Item 1, wherein component (A) is at least one member selected from the group consisting of hydrogenated products of acrylated rosins, hydrogenated rosins, and polymerized rosins.

3. The flux for lead-free solder according to Item 1 or 2, wherein component (b1) is a dibasic acid activating agent the total number of carbons of which is 3 to 10.

4. The flux for lead-free solder according to any one of Items 1 to 3, wherein the concentration of bromine atoms derived from component (b2) is 500 to 30000 ppm per 0.1 g of the flux.

5. The flux for lead-free solder according to any one of Items 1 to 4, wherein component (b2) is at least one member selected from the group consisting of bromine-based alcohol compounds and bromine-based carboxylic compounds.

6. The flux for lead-free solder according to any one of Items 1 to 5, wherein component (b3) is at least one member selected from the group consisting of di(2-ethylhexyl)amine and di-n-octylamine.

7. The flux for lead-free solder according to any one of Items 1 to 6, wherein component (C) is an amide-based thixotropic agent.

8. The flux for lead-free solder according to any one of Items 1 to 7, wherein component (D) is an alcohol compound.

9. A lead-free solder paste comprising the flux for lead-free solder according to any one of Items 1 to 8 and a lead-free solder powder.

Advantageous Effects of Invention

Mixing the flux for lead-free solder according to the present invention with a solder powder provides a solder paste that exhibits excellent insulation resistance of the flux residue after the reflow step, while maintaining wettability. The solder paste exhibits not only storage stability but also excellent screen printability. In addition, when the solder paste is printed onto an electrode, and components are mounted thereon, followed by reflow, fine side balls are unlikely to form around the components, making it easier to prevent problems, such as short circuiting, beforehand.

Brief Description of Drawings

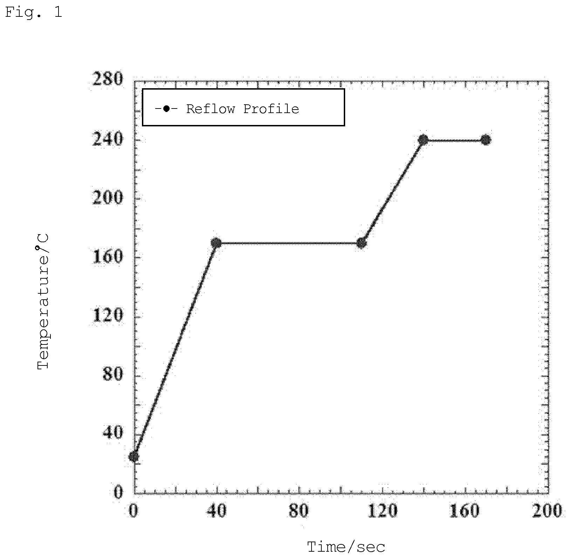

Fig. 1 is a graph illustrating a reflow temperature profile for evaluating side ball performance in the Examples and Comparative Examples.

Description of Embodiments

Flux for Lead-free Solder

The flux for lead-free solder according to the present invention (hereinafter, "the flux") comprises (A) a rosin-based base resin (hereinafter, "component (A)"), (B) an activating agent (hereinafter, "component (B)"), (C) a thixotropic agent (hereinafter, "component (C)"), and (D) a solvent (hereinafter, " component (D)"), and the activating agent comprises (b1) a dibasic acid activating agent (hereinafter, "component (b1)"), (b2) a bromine-based activating agent (hereinafter, "component (b2)"), and (b3) an amine-based activating agent represented by formula (1) (hereinafter, "component (b3)").

$$R^1\text{-NH-}R^2 \qquad (1)$$

wherein $R^1$ and $R^2$ independently represent $C_{6-10}$ alkyl.

Mixing the flux with a solder powder provides a solder paste that exhibits excellent insulation resistance of the flux residue after the reflow step, while maintaining wettability.

Known rosin-based base resins can be used as component (A) without any particular limitation. Examples of component (A) include natural rosins, such as gum rosin, wood rosin, and tall oil rosin, and hydrogenated products thereof (hydrogenated rosins); and modified rosins, such as acrylated rosin, disproportionated rosin, formylated rosin, fumarated rosin, maleated rosin, and polymerized rosin, and hydrogenated products thereof. These can be used singly or in a combination of two or more. Of these, hydrogenated products of acrylated rosin, hydrogenated rosin, and polymerized rosin are preferable from the standpoint of solder paste wettability.

The content of component (A) in the flux (on a solids content basis, the same applies hereinafter) is typically about 30 to 55 wt%, preferably about 35 to 50 wt%, and more preferably about 35 to 45 wt%. The content of component (A) within these numerical ranges is likely to impart a suitable viscosity to the solder paste, leading to excellent printability.

The flux can also contain a non-rosin-based base resin, in addition to component (A). Specific examples of non-rosin-based base resins include synthetic resins, such as epoxy resin, acrylic resin, polyimide resin, nylon resin, polyacrylonitrile resin, vinyl chloride resin, vinyl acetate resin, polyolefin resin, fluororesin, and ABS resin; and elastomers, such as isoprene rubber, styrene butadiene rubber (SBR), butadiene rubber (BR), chloroprene rubber, nylon rubber, nylon elastomer, and polyester elastomers. When used, a non-rosin-based base resin is typically added in an amount of less than 5 wt% relative to component (A) taken as 100 wt%.

Component (B) essentially contains a dibasic acid activating agent (b1), a bromine-based activating agent (b2), and an amine-based activating agent (b3). If one of these is missing, the resulting solder paste is impaired in its balance of wettability, storage stability, or insulation resistance.

Component (b1) is a dibasic acid activating agent for use in removing the oxide layer of lead-free solder powder, and any known dibasic acid activating agent can be used without limitation. Specific examples of component (b1) include succinic acid, malonic acid, glutaric acid, adipic acid, azelaic acid, sebacic acid, and dodecanedioic acid. Of these, from the standpoint of wettability, component (b1) is preferably succinic acid, glutaric acid, adipic acid, azelaic acid, and sebacic acid, which are a dibasic acid activating agent the total number of carbons of which is 3 to 10. More preferable dibasic acid activating agents are glutaric acid and adipic acid.

The content of component (b1) in the flux is not particularly limited. From the standpoint of solder paste wettability, the content of component (b1) is typically about 0.5 to 10 wt%, preferably about 0.75 to 7.5 wt%, and more preferably about 1 to 5 wt%.

Component (b2) is used to improve the wettability of solder paste, and any known bromine-based activating agent can be used without particular limitation. Specific examples of component (b2) include bromine-based alkane, bromine-based alkene, bromine-based alcohol compounds, bromine-based carboxylic compounds, and bromine-based amine compounds.

Examples of bromine-based alkane include 1,2,3,4-tetrabromobutane, and 1,2-dibromo-1-phenylethane. Examples of bromine-based alkene include 1-bromo-3-methyl-1-butene, 1,4-dibromobutene, 1-bromo-1-propene, 2,3-dibromopropene, and 1,2-dibromostyrene.

Examples of bromine-based alcohol compounds include 1-bromo-2-butanol, 1-bromo-2-propanol, 3-bromo-1-propanol, 3-bromo-1,2-propanediol, 1,4-dibromo-2-butanol, 1,3-dibromo-2-propanol, 2,3-dibromo-1-propanol, 1,4-dibromo-2,3-butanediol, cis-2,3-dibromo-2-butene-1,4-diol, trans-2,3-dibromo-2-butene-1,4-diol, and 2,2-bis(bromomethyl)-1,3-propanediol. Of these, particularly from the standpoint of wettability and side ball performance, trans-2,3-dibromo-2-butene-1,4-diol and 2,2-bis(bromomethyl)-1,3-propanediol are preferable.

The bromine-based carboxylic compounds include 3-bromopropionic acid, 2-bromopentanoic acid, 5-bromo-n-pentanoic acid, 2-bromoisopentanoic acid, 2,3-dibromosuccinic acid, 2-bromosuccinic acid, and 2,2-dibromoadipic acid.

Examples of the bromine-based amine compounds include ethylamine bromate, diethylamine bromate, methylamine bromate, and diphenylguanidine hydrobromate.

These components (b2) can be used singly or in a combination of two or more. Of these, from the standpoint of solder paste wettability and storage stability, bromine-based alcohol compounds and bromine-based carboxylic compounds are preferable. More preferable bromine-based alcohol compounds are trans-2,3-dibromo-2-butene-1,4-diol and 2,2-bis(bromomethyl)-1,3-propanediol. A more preferable bromine-based carboxylic compound is 2,3-dibromosuccinic acid.

The content of component (b2) in the flux is not particularly limited. From the standpoint of solder paste wettability and storage stability, the content of component (b2) is typically about 0.1 to 5 wt%, preferably about 0.1 to 4 wt%, and more preferably about 0.1 to 3 wt%.

The concentration of bromine atoms derived from component (b2) in the flux is typically about 500 to 30000 ppm, preferably about 500 to 25000 ppm, and more preferably about 500 to 20000 ppm, per 0.1 g of the flux. 500 ppm or more of the content of component (b2) achieves excellent wettability, and 30000 ppm or less of the content of component (b2) achieves excellent storage stability of the solder paste. The concentration can be measured, for example, by combustion ion chromatography. The concentration can be determined specifically by burning 0.1 g of the flux at a high temperature (typically about 1200 to 1300°C), allowing the combustion gas to pass through purified water (absorbing liquid) to dissolve the gas in purified water, and quantifying bromine ions in the obtained absorbing liquid with an ion chromatographic apparatus. The preparation of a calibration curve uses a solid standard sample whose bromine concentration is known.

Component (b3) is an amine-based activating agent represented by formula (1) :

$$R^1\text{-NH-}R^2 \qquad (1)$$

wherein $R^1$ and $R^2$ independently represent $C_{6\text{-}10}$ alkyl.

Alkyl represented by $R^1$ and $R^2$ in formula (1) may be either linear or branched-chain alkyl. The number of carbons of alkyl represented by $R^1$ and $R^2$ in formula (1) is each individually 6 to 10, and preferably 7 to 9. When the number of carbons is less than 6, or more than 10, the insulation resistance of the flux residue is likely to decrease.

Examples of component (b3) include di-n-hexylamine, di-n-heptylamine, di-n-octylamine, di-n-nonylamine, di-n-decylamine, di(1-ethylhexyl)amine, and di(2-ethylhexyl)amine. These can be used singly or in a combination of two or more. Of these, di(2-ethylhexyl)amine, di-n-octylamine, and di-n-hexylamine are preferable, and from the standpoint of the insulation resistance of the flux residue, di(2-ethylhexyl)amine and di-n-octylamine are more preferable.

The content of component (b3) in the flux is not particularly limited. From the standpoint of the insulation resistance of the flux residue, the content of component (b3) is typically about 0.5 to 5 wt%, preferably about 0.75 to 4.5 wt%, and more preferably about 1 to 4wt%.

For the flux, an activating agent other than component (B) can be used. Other activating agents include picolinic acid, N-lauroyl sarcosine, capric acid, lauric acid, myristic acid, palmitic acid, margaric acid, and stearic acid. When an activating agent other than component (B) is used, the content of the agent in the flux is not particularly limited, and is typically about 0.5 to 5 wt%.

Any known thixotropic agent can be used for component (C) without particular limitation. Specific examples of component (C) include plant-based thixotropic agents, such as hydrogenated castor oil, beeswax, and carnauba wax; and amide-based thixotropic agents, such as stearamide and 12-hydroxystearic ethylene bisamide. These can be used singly or in a combination of two or more. Of these, from the standpoint of solder paste printability, amide-based thixotropic agents are preferable. A more preferable amide-based thixotropic agent is 12-hydroxystearic ethylene bisamide.

The content of component (C) in the flux is not particularly limited. From the standpoint of solder paste printability and side ball performance, the content of component (C) is typically about 3 to 10 wt%, preferably about 3 to 8 wt%, and more preferably about 5 to 8 wt%.

Any known solvent can be used for component (D) without limitation. Specific examples of component (D) include alcohol compounds, such as ethylene glycol monohexyl ether, diethylene glycol monobutyl ether, diethylene glycol monohexyl ether (hexyl diglycol), diethylene glycol 2-ethylhexyl ether (2-ethylhexyl glycol), 2-(2-n-butoxyethoxy)ethanol, tripropylene glycol monomethyl ether, benzyl alcohol, 1,3-butanediol, 1,4-butanediol, and octanediol; ester compounds, such as butyl benzoate, diethyl adipate, and 2-(2-n-butoxyethoxy)ethyl acetate; terpene compounds, such as α-terpinene, myrcene, allo-ocimene, limonene, dipentene, α-pinene, β-pinene, carvone, ocimene, and phellandrene; terpineol compounds, such as α-terpineol and terpineol; hydrocarbon compounds, such as dodecane and tetradecene; pyrrolidone compounds, such as N-methyl-2-pyrrolidone; and alkene compounds, such as methyl propylene glycol, butyl propylene glycol, phenyl propylene glycol, and methyl propylene triglycol. Of these, alcohol compounds are preferable from the standpoint of solder paste storage stability. A more preferable alcohol compound is diethylene glycol monohexyl ether (hexyl diglycol).

The content of component (D) in the flux is not particularly limited. From the standpoint of solder paste printability, the content of component (D) is typically about 25 to 55 wt%, preferably about 25 to 50 wt%, and more preferably about 30 to 50 wt%.

The method for producing the flux is not particularly limited. Typically, the flux is obtained by fully mixing component (A), component (B), and component (C) in component (D) while heating until components (A), (B), and (C) are melted.

The flux may contain additives, such as an antioxidant, a fungicide, and a delusterant, in addition to component (A), component (B), component (C), and component (D). Examples of antioxidants include 2,6-di-tert-butyl-p-cresol, para-tert-amylphenol, and 2,2'-methylenebis(4-methyl-6-tert-butylphenol). Examples of fungicides include 4,4-dimethyloxazolidine, 3,4,4-trimethyloxazolidine, modified barium metaborate, potassium N-hydroxy-methyl-N-methyldithiocarbamate, 2-(thiocyanomethylthio) benzothiazole, potassium dimethyldithiocarbamate, adamantane, N-(trichloromethylthio)phthalimide, 2,4,5,6-tetrachloroisophthalonitrile, orthophenylphenol, 2,4,5-trichlorophenol, dehydroacetic acid, copper naphthenate, copper octoate, organic arsenic compounds, tributyltin oxide, zinc naphthenate, and copper 8-quinolinate. Examples of delusterants include synthetic resin beads, such as acrylic resins including polyacrylic acid ester and polymethacrylic acid ester, copolymers thereof, acrylic-styrene copolymers, polystyrene-based resins, and polyethylene-based resins; and inorganic oxide-based beads, such as calcium carbonate, clay, talc, mica powder, baryte, fine powder silica, diatomaceous earth, calcium silicate, synthetic aluminum silicate, glass beads, and Shirasu-balloons. When additives are used, the total amount of all additives in the flux is not particularly limited, and is typically about 0.1 to 5 wt%.

Lead-free Solder Paste

The lead-free solder paste according to the present invention contains the flux and a lead-free solder powder.

Any known lead-free solder powder can be used without particular limitation, as long as the powder does not contain lead. The lead-free solder powder is preferably an Sn-based lead-free solder powder, such as Sn-Ag-, Sn-Cu-, Sn-Sb-, Sn-Zn-, or Sn-Bi-based lead-free solder powder. The lead-free solder powder may be doped with one or more elements of Ag, Al, Au, Bi, Co, Cu, Fe, Ga, Ge, In, Ni, P, Pt, Sb, and Zn. Specific examples of lead-free solder powder include Sn95Sb5, Sn99.3Cu0.7, Sn97Cu3, Sn92Ag2Cu6, Sn99Ag0.3Cu0.7, Sn95Ag1Cu4, Sn96.5Ag3Cu0.5, Sn97Ag3, Sn96.3Ag3.7, Sn42-Bi58, and Sn-10Sb. The mean particle size of the lead-free solder powder is not particularly limited, and is typically about 1 to 50 μm, and preferably 15 to 40 μm. The shape of the powder is also not particularly limited, and is, for example, spherical or indefinite. "Spherical" means that the aspect ratio of the length to the width of a particle is preferably within 1.2.

The proportion of each component in the lead-free solder paste according to the present invention is not particularly limited, and the flux:lead-free solder powder is typically about 5:95 to 30:70, and preferably about 8:92 to 20:80 on a weight basis.

The lead-free solder paste according to the present invention exhibits not only storage stability but also excellent screen printability. In addition, when the solder paste is printed onto an electrode, and components are mounted thereon, followed by reflow, fine side balls are unlikely to form around the components, making it easier to prevent problems, such as short circuiting, beforehand.

Examples

The following describes the present invention with reference to Examples and Comparative Examples in more detail, but the present invention is not limited to these Examples.

Preparation of Flux

Example 1

45 wt% of a hydrogenated product of acrylated rosin (trade name "KE-604," Arakawa Chemical Industries, Ltd.), 1 wt% of glutaric acid (Tokyo Chemical Industry Co., Ltd.), 6 wt% of an amide-based thixotropic agent (trade name "MA-WAX-O," 12-hydroxystearic ethylene bisamide, KF Trading Co., Ltd.), 2 wt% of 2,2-bis(bromomethyl)-1,3-propanediol, 1.5 wt% of dioctylamine, and 44.5 wt% of hexyl diglycol were mixed, and melted while heating, thereby preparing a flux for lead-free solder.

Subsequently, 0.1 g of the flux was collected, and burned at 1250°C with a commercially available combustion apparatus (trade name "sample combustion prep-station AQF-100" Mitsubishi Chemical Analytech Co., Ltd.). The generated combustion gas was allowed to pass through purified water to prepare a sample liquid. Subsequently, the sample liquid was set in a commercially available ion chromatographic apparatus (trade name "DX-500," Nippon Dionex K.K.), and the bromine ion concentration was automatically measured. A calibration curve based on the peaks of bromine atoms revealed that the concentration based on bromine atoms derived from component (b) is 12200 ppm per 0.1 g of the flux. The standard substance used was a bromide ion standard solution (Wako Pure Chemical Industries, Ltd.). Table 1 shows the results (the same applies below).

Examples 2 to 13 and Comparative Examples 1 to 5

Flux was prepared in the same manner as in Example 1, except that the starting material formulations shown in Table 1 were applied.

Preparation of Lead-free Solder Paste

A commercially available lead-free solder powder (96.5Sn/3Ag/0.5Cu, Mitsui Mining & Smelting Co. Ltd., particle size 20 to 38 $\mu$m) and the flux of Example 1 were kneaded with a softener so as to give respectively 89 wt% and 11 wt%, thereby preparing a solder paste. In the same manner as in Example 1, solder pastes were prepared using the flux of Examples 2 to 13 and Comparative Examples 1 to 5.

Storage Stability

The viscosity of the solder pastes of Examples 1 to 13 and Comparative Examples 1 to 5 was measured with a spiral viscometer (trade name "PCU-205," coaxial double cylindrical rotary viscometer, Malcom Co.,Ltd.) immediately after preparation and also after the pastes were kept warm in a thermostatic bath at 40°C for 24 hours. The viscosity increase rate of the solder pastes was calculated from the equation shown below.

```
Viscosity Increase Rate (%) = [(Viscosity of solder paste after
being kept warm at 40°C for 24 hours measured at 10 rpm -
Viscosity of solder paste immediately after preparation measured
at 10 rpm)/(Viscosity of solder paste immediately after
preparation measured at 10 rpm)]×100
```

The above warm condition was designed for a temperature-accelerated test, and the viscosity increase rate in this test substantially corresponds to the viscosity increase rate observed after storage at a temperature of 0 to 10° C for 6 months or more. A solder paste with a viscosity increase rate of less than 10% was determined to be excellent in storage stability, taking into account a margin of error in measurement.

Wettability

Solder pastes on a copper plate were subjected to heating and reflow in an air atmosphere, and their wettability was evaluated in accordance with a dewetting test prescribed in JIS Z 3284, appendix 10. The criteria for evaluation were as follows.

Evaluation Criteria

1. No non-wetting occurred on the copper electrode substrate, and the solder paste spread out beyond the area of the test plate on which the paste was applied.
2. All of the solder paste applied onto the copper electrode spread out on the area on which the solder paste was applied.
3. Slight non-wetting occurred.
4. No wetting occurred on the copper electrode substrate.

Solder pastes were prepared and allowed to stand at 40°C for 24 hours, and then the same test was performed.

Insulation Resistance

In accordance with JIS Z 3284, appendix 3, the solder pastes of Examples 1 to 13 and Comparative Examples 1 to 5 were subjected to reflow and exposed to an environment of a temperature of 85°C and a humidity of 85% for 7 days, followed by evaluating the insulation resistance of the flux residues. The higher the value, the better the insulation resistance.

Side Ball Performance

Predetermined patterns were printed using the solder pastes of Examples 1 to 13 and Comparative Examples 1 to 5 with a 100-$\mu$m thick stencil mask, and a 2012 capacitor was mounted with a mounter, followed by reflow in an air atmosphere under the standard profile conditions shown in Fig. 1. After reflow, the side ball performance was evaluated based on the number of side balls that came away from the parts. The smaller the number of side balls, the better the side ball performance.

Table 1

| | | Ex. 1 | Ex. 2 | Ex. 3 | Ex. 4 | Ex. 5 | Ex. 6 | Ex. 7 | Ex. 8 | Ex. 9 | Ex. 10 | Ex. 11 | Ex. 12 | Ex. 13 | Comp. Ex. 1 | Comp. Ex. 2 | Comp. Ex. 3 | Comp. Ex. 4 | Comp. Ex. 5 |
|---|---|---|---|---|---|---|---|---|---|---|---|---|---|---|---|---|---|---|---|
| (A) | KE-604 | 45.0 | 45.0 | 45.0 | 45.0 | | | 45.0 | 45.0 | 45.0 | 45.0 | 45.0 | 43.5 | 45.0 | 45.0 | 45.0 | 46.0 | 47.0 | 46.5 |
| | CRW-300 | | | | | 8.0 | | | | | | | | | | | | | |
| | CP-140 | | | | | 31.6 | 39.6 | | | | | | | | | | | | |
| (b1) | GA | 1.0 | 1.0 | 1.0 | 1.0 | 6.0 | 6.0 | | 1.0 | 1.0 | 1.0 | 1.0 | 1.0 | 1.0 | 1.0 | 1.0 | | 1.0 | 1.0 |
| | AA | | | | | | | 1.0 | | | | | | | | | | | |
| (b2) | BMPD | 2.0 | 2.0 | 1.0 | 1.0 | 1.5 | 1.5 | 2.0 | | 2.0 | 2.0 | 2.0 | 2.0 | | 1.0 | 1.0 | 2.0 | | 2.0 |
| | TDBDO | | | | | | | | 2.0 | | | | | | | | | | |
| | DBSA | | | | | | | | | | | | | 1.0 | | | | | |
| (b3) | DHA | | | | | | | | | | 1.5 | | | | | | | | |
| | DOA | 1.5 | | 1.5 | | 1.4 | 1.4 | 1.5 | 1.5 | 1.5 | | | 3.0 | 1.5 | | | 1.5 | 1.5 | |
| | DEHA | | 1.5 | | 1.5 | | | | | | | | | | | | | | |
| | DDA | | | | | | | | | | | 1.5 | | | | | | | |
| | DSA | | | | | | | | | | | | | | 1.5 | | | | |
| | Dihydrogenated Tallow Amine | | | | | | | | | | | | | | | 1.5 | | | |
| (C) | MAWAXO | 6.0 | 6.0 | 6.0 | 6.0 | 6.0 | 6.0 | 6.0 | 6.0 | 6.0 | 6.0 | 6.0 | 6.0 | 6.0 | 6.0 | 6.0 | 6.0 | 6.0 | 6.0 |
| (D) | HeDG | 44.5 | 44.5 | 45.5 | 45.5 | 45.5 | 45.5 | 44.5 | 44.5 | | 44.5 | 44.5 | 44.5 | 45.5 | 45.5 | 45.5 | 44.5 | 44.5 | 44.5 |
| | MFTG | | | | | | | | | 44.5 | | | | | | | | | |
| Concentration of Bromine Atoms (ppm) | | 12200 | 12200 | 6100 | 6100 | 9200 | 9200 | 12200 | 12200 | 12200 | 12200 | 12200 | 12200 | 5800 | 6100 | 6100 | 12200 | 0 | 12200 |
| Wettability | | 2 | 1 | 2 | 1 | 1 | 1 | 2 | 2 | 2 | 2 | 2 | 2 | 1 | 2 | 2 | 2 | 3 | 2 |
| Wettability After 1 day at 40°C | | 2 | 1 | 2 | 1 | 1 | 1 | 2 | 2 | 2 | 2 | 2 | 2 | 2 | 2 | 2 | 3 | 3 | 2 |
| Viscosity Increase Rate (%) | | 8.5 | 9.6 | 9.6 | 9.6 | 5.2 | 4.2 | 9.8 | 8.9 | 4.5 | 7.5 | 8.6 | 6.5 | 9.7 | 12.3 | 9.6 | 6.5 | 6.2 | 12.3 |
| Insulation Resistance Value (Ω) (1 Week Later) | | $8.6{\times}10^9$ | $9.6{\times}10^9$ | $9.2{\times}10^9$ | $4.8{\times}10^9$ | $3.2{\times}10^9$ | $5.2{\times}10^9$ | $7.3{\times}10^9$ | $3.5{\times}10^9$ | $1.2{\times}10^{10}$ | $4.3{\times}10^9$ | $8.2{\times}10^9$ | $9.1{\times}10^9$ | $3.3{\times}10^9$ | $7.3{\times}10^8$ | $9.6{\times}10^8$ | $8.9{\times}10^9$ | $9.4{\times}10^9$ | $8.3{\times}10^8$ |
| Side Ball Performance (Number of Side Balls) | | 4 | 4 | 3 | 3 | 1 | 0 | 4 | 3 | 1 | 5 | 2 | 2 | 1 | 2 | 3 | 8 | 7 | 6 |

EP 3 308 901 A1

Abbreviation Of Compounds

- KE-604: a hydrogenated product of acrylated rosin (Arakawa Chemical Industries, Ltd.)
- CP-140: polymerized rosin (Arakawa Chemical Industries, Ltd.)
- CRW-300: hydrogenated rosin (Arakawa Chemical Industries, Ltd.)
- GA: glutaric acid
- AA: adipic acid
- BMPD: 2,2-bis(bromomethyl)-1,3-propanediol
- TDBDO: trans-2,3-dibromo-2-butene-1,4-diol
- DBSA: dibromosuccinic acid
- DHA: dihexylamine
- DOA: dioctylamine
- DEHA: di(2-ethylhexyl)amine
- DDA: didecylamine
- DSA: distearylamine
- Di-hardened beef tallow amine (trade name: Armin 2HT, Lion Corporation, the number of carbon atoms of alkyl is 12 to 20)
- MAWAXO: 12-hydroxystearic ethylene bisamide (KF Trading Co., Ltd.)
- HeDG: diethylene glycol monohexyl ether (hexyl diglycol)
- MFTG: tripropylene glycol monomethyl ether

## Claims

1. A flux for lead-free solder comprising

    (A) a rosin-based base resin,
    (B) an activating agent,
    (C) a thixotropic agent, and
    (D) a solvent,

   wherein (B) the activating agent contains (b1) a dibasic acid activating agent, (b2) a bromine-based activating agent, and (b3) an amine-based activating agent represented by formula (1)

   $$R^1\text{-NH-}R^2 \qquad (1)$$

   wherein $R^1$ and $R^2$ independently represent $C_{6-10}$ alkyl.

2. The flux for lead-free solder according to claim 1, wherein component (A) is at least one member selected from the group consisting of hydrogenated products of acrylated rosins, hydrogenated rosins, and polymerized rosins.

3. The flux for lead-free solder according to claim 1 or 2, wherein component (b1) is a dibasic acid activating agent the total number of carbons of which is 3 to 10.

4. The flux for lead-free solder according to any one of claims 1 to 3, wherein the concentration of bromine atoms derived from component (b2) is 500 to 30000 ppm per 0.1 g of the flux.

5. The flux for lead-free solder according to any one of claims 1 to 4, wherein component (b2) is at least one member selected from the group consisting of bromine-based alcohol compounds and bromine-based carboxylic compounds.

6. The flux for lead-free solder according to any one of claims 1 to 5, wherein component (b3) is at least one member selected from the group consisting of di(2-ethylhexyl)amine and di-n-octylamine.

7. The flux for lead-free solder according to any one of claims 1 to 6, wherein component (C) is an amide-based thixotropic agent.

8. The flux for lead-free solder according to any one of claims 1 to 7, wherein component (D) is an alcohol compound.

9. A lead-free solder paste comprising the flux for lead-free solder according to any one of claims 1 to 8 and a lead-free solder powder.

Fig. 1

<table>
<tr><td colspan="2" align="center">**INTERNATIONAL SEARCH REPORT**</td><td colspan="2">International application No.<br>PCT/JP2016/066848</td></tr>
</table>

**A. CLASSIFICATION OF SUBJECT MATTER**
*B23K35/363*(2006.01)i, *B23K35/26*(2006.01)n, *C22C12/00*(2006.01)n, *C22C13/00*(2006.01)n, *C22C13/02*(2006.01)n

According to International Patent Classification (IPC) or to both national classification and IPC

**B. FIELDS SEARCHED**

Minimum documentation searched (classification system followed by classification symbols)
B23K35/363, B23K35/26, C22C12/00, C22C13/00, C22C13/02

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2016 |
| Kokai Jitsuyo Shinan Koho | 1971-2016 | Toroku Jitsuyo Shinan Koho | 1994-2016 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2012/081688 A1 (Arakawa Chemical Industries, Ltd.), 21 June 2012 (21.06.2012), & US 2013/0276937 A1 & CN 103269826 A & KR 10-2014-0023266 A & TW 201237012 A1 | 1-9 |
| A | JP 2003-338682 A (NEC Infrontia Corp.), 28 November 2003 (28.11.2003), & US 2003/0168499 A1 & TW 200401596 A & CN 1447638 A & KR 10-2003-0061674 A | 1-9 |
| A | JP 2014-195830 A (Arakawa Chemical Industries, Ltd.), 16 October 2014 (16.10.2014), (Family: none) | 1-9 |

☐ Further documents are listed in the continuation of Box C.    ☐ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 02 September 2016 (02.09.16) | 13 September 2016 (13.09.16) |

| Name and mailing address of the ISA/ | Authorized officer |
|---|---|
| Japan Patent Office<br>3-4-3,Kasumigaseki,Chiyoda-ku,<br>Tokyo 100-8915,Japan | |
| | Telephone No. |

Form PCT/ISA/210 (second sheet) (January 2015)

**EP 3 308 901 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002120089 A